# EUROPÄISCHE PATENTSCHRIFT

(11) **EP 3 738 700 B1**
(45) Veröffentlichungstag und Bekanntmachung des Hinweises auf die Patenterteilung: **15.05.2024**
(21) Anmeldenummer: 20170812.0
(22) Anmeldetag: 22.04.2020
(51) Int. Cl.: B23B 31/117, B23B 31/30

(54) **HYDRAULISCH SPANNBARER WERKZEUG-/WERKSTÜCKHALTER**
HYDRAULIC CLAMPING HOLDER FOR TOOL/WORKPIECE
SUPPORT DE SERRAGE HYDRAULIQUE POUR OUTIL/PIECE DE TRAVAIL

(30) Priorität: 02.05.2019 DE 102019111281
(43) Veröffentlichungstag der Anmeldung: 18.11.2020
(73) Patentinhaber: Haimer GmbH, 86568 Hollenbach-Igenhausen (DE)
(72) Erfinder: Ziegltrum, Franz, 86568 Hollenbach-Igenhausen (DE)

(56) Entgegenhaltungen:
- DE-A1-102006 013 662
- DE-A1-102010 008 872
- DE-A1-102016 119 752

## Beschreibung

Die Erfindung betrifft eine Vorrichtung zum hydraulischen Spannen von Werkzeugen oder Werkstücken, kurz einen Werkzeug- oder Werkstückhalter, mit einem Spannabschnitt zum Spannen eines Werkzeugs oder Werkstücks, welcher Spannabschnitt in seinem Inneren mehrere Kammern aufweist, welche durch ein Kanalsystem fluidal kommunizierend verbunden sind.

Es ist bekannt, den Schaft eines schaftseitig einzuspannenden Werkzeugs in einer zentrischen Aufnahmeöffnung einer ringförmigen, in sich geschlossenen, meist als Hülsenpartie ausgeführten Partie eines Werkzeughalters mittels Presssitz zu halten. Die Hülsenpartie bildet das werkzeugseitige Ende eines Werkzeughalters ansonsten üblicher Bauart und erstreckt sich längs bzw. axial entlang einer Längsachse des Werkzeughalters. Bei rotierenden Werkzeugen bzw. Werkzeughaltern entspricht die Längsachse auch der Rotationsachse des Werkzeughalters.

Es sind weiter auch verschiedene Möglichkeiten zur Realisierung dieses den Schaft des einzuspannenden Werkzeugs in der Hülsenpartie des Werkzeughalters haltenden Presssitzes bekannt.

So kann - nach einer ersten Möglichkeit - diese Hülsenpartie des Werkzeughalters durch Erwärmen so weit in radialer Richtung aufgeweitet werden, dass der kalte Schaft des Werkzeugs in die Hülsenpartie eingeschoben oder aus ihr herausgezogen werden kann.

Sobald die Hülsenpartie wieder abgekühlt ist, stellt sich zwischen ihr und dem Schaft des Werkzeugs ein Pressverbund ein, mittels dem das Werkzeug zuverlässig in dem Werkzeughalter festgehalten wird (Schrumpftechnologie, vgl. etwa EP 1 353 768 B1).

Eine zweite Alternative sind sog. Spannzangenfutter, bei denen der Werkzeugschaft mit Hilfe einer Spannzange reibschlüssig eingeklemmt gehalten wird, indem die mit einem Außenkonus versehene Spannzange in einen komplementären Kegelsitz eingetrieben und dadurch zum Schließen gebracht wird.

Alternativ - nach einer dritten Möglichkeit - kann das Werkzeug auch hydraulisch in dem Werkzeughalter bzw. in der Hülsenpartie eingespannt werden.

Zu diesem Zweck ist innerhalb der besagten Hülsenpartie eines solchen hydraulisch spannbaren Werkzeughalters ein hydraulisches Spannorgan angeordnet, welches bei Beaufschlagung mit hydraulischem Druck, beispielsweise aufbau-/bewirkbar über ein Hydraulikmedium, wie Öl, seinen den Werkzeugschaft umgreifenden Innendurchmesser verringert und so den Werkzeugschaft reibschlüssig einspannt.

Ein solcher hydraulisch spannbarer Werkzeughalter ist beispielsweise aus der Broschüre "TENDO, E compact, Das Hydro-Dehnspannfutter" (TENDO, E compact, Das Hydro-Dehnspannfutter, Superior Clamping and Gripping) bekannt.

Dieser hydraulisch spannbare Werkzeughalter sieht ein hydraulisches Spannsystem in Form von innerhalb der besagten Hülsenpartie - im Folgenden wegen dortiger Spannfunktion für das Werkzeug auch als Spannabschnitt des Werkzeughalters bezeichnet - mehrere, in diesem Fall zwei, über ein Kanalsystem fluidal kommunizierend verbundene (Druck-)Kammern - dort insgesamt als (Druck-)Kammersystem bezeichnet - vor.

Die zwei (Druck-)Kammern sind als im Inneren des Spannabschnitts angeordnete, um die zentrische Aufnahmeöffnung - bezüglich der Längsachse des hydraulisch spannbaren Werkzeughalters - koaxial in Umfangsrichtung um die Längsachse des Werkzeughalters/Hydro-Dehnspannfutters umlaufende ringförmige und - bezüglich der Längsachse des hydraulisch spannbaren Werkzeughalters - axial nebeneinanderliegende Hohlräume ausgebildet.

Die zwei (Druck-)Kammern stehen über einen - ebenfalls als koaxial in Umfangsrichtung um die Längsachse des Werkzeughalters/Hydro-Dehnspannfutters umlaufenden (ringförmigen) Ringspalt zwischen den zwei Kammern ausgebildeten - Verbindungskanal miteinander in fluidal kommunizierender Verbindung, kurz in Fluid-Verbindung; die der Aufnahmeöffnung näher gelegene Kammer ist über einen Druckkanal mit einer Spannkammer im Werkzeughalter verbunden, wo mittels einer (von außen einschraubbaren) Spannschraube und einem Spannkolben ein Druck in dem mit einem Hydraulikmedium gefüllten Kammersystem aufbaubar ist. Unter diesen Druck wölbt sich der Spannbereich - radial zur Längsachse nach innen - gegen den Werkzeugschaft, wodurch dieser so reibschlüssig eingespannt wird.

DE 10 2006 013662 A1 offenbart eine Vorrichtung zum hydraulischen Spannen von Werkzeugen oder Werkstücken gemäß dem Oberbegriff des Anspruchs 1.

Derartige hydraulisch spannbare Werkzeughalter bzw. solche Hydro-Dehnspannfutter mit einem solchen Kammersystem zeigen den Nachteil, dass diese - bei Belastung des eingespannten Werkzeugs - nachgiebig sind.

Bei Belastung des Werkzeugs kann nämlich das Hydraulikmedium - über das Kanalsystem - praktisch ohne großen Widerstand im Kammersystem "hin-und her" fließen.

Wenn so - beispielsweise - das Werkzeug durch Bearbeitungskräfte seitlich verschoben oder geneigt wird, so verengt sich der Querschnitt einer Kammer in Richtung der Belastung und erweitert sich in Richtung entgegengesetzt der Belastung. Gleichzeitig erweitert bzw. verengt sich der Querschnitt einer anderen Kammer in umgekehrter Richtung. Das Hydraulikmedium fließt - anschaulich ausgedrückt - von einem Bereich des Kammersystems in den anderen, ohne der Verschiebung des Werkzeuges einen Widerstand zu bieten. Der Spannbereich derartiger hydraulisch spannbarer Werkzeughalter bzw. solcher Hydro-Dehnspannfutter wird nachgiebig, wodurch diese so an dynamischer, also bei schnellem Wechsel der Belastung auftretender, Steifigkeit verlieren.

Mit solchermaßen verringerter dynamischer Steifigkeit bei diesen hydraulisch spannbaren Werkzeughaltern geht auch eine verminderte Bearbeitungspräzision einher.

Entsprechendes gilt so auch für hydraulisch spannbare Werkstückhalter - mit entsprechenden hydraulischen Spannorganen, welche in diesem Fall die Werkstücke spannen.

Der Erfindung liegt die Aufgabe zugrunde, einen hydraulisch spannbaren Werkzeug-/Werkstückhalter vorzusehen, mit welchem eine höhere dynamische Steifigkeit und Bearbeitungspräzision möglich ist.

Diese Aufgabe wird gelöst durch eine Vorrichtung zum hydraulischen Spannen von Werkzeugen oder Werkstücken, kurz einen hydraulisch spannbaren Werkzeughalter oder hydraulisch spannbaren Werkstückhalter, mit den Merkmalen des unabhängigen Anspruchs. Vorteilhafte Weiterbildungen der Erfindung sind Gegenstand abhängiger Ansprüche sowie der nachfolgenden Beschreibung.

Bei dem hydraulisch spannbaren Werkzeug- bzw. hydraulisch spannbaren Werkstückhalter, der Einfachheit halber im Folgenden meist beides nur als "Werkzeughalter" bezeichnet, ist ein Spannabschnitt zum Spannen eines Werkzeugs bzw. Werkstücks (dann beides auch im Folgenden der Einfachheit halber meist nur mit "Werkzeug" bezeichnet), beispielsweise eines Rotationswerkzeugs, wie eines Bohrers, eines Fräsers, eines Reibwerkzeugs oder eines Messerkopfs oder eines beliebigen (maschinell) zu verarbeitenden Gegenstands, vorgesehen, welcher Spannabschnitt in seinem Inneren mehrere Kammern aufweist, welche durch ein Kanalsystem fluidal kommunizierend verbunden sind.

Dabei kann unter einer Kammer ein beliebig, aber definiert (nach vorgebbaren Maßstäben) geformter (Hohl-)Raum verstanden werden, welcher insbesondere in der Lage ist, zumindest zeitweise ein Hydraulikmedium, beispielsweise ein Öl, aufzunehmen. Zufällige und an undefinierten Stellen im Werkstoffgefüge des Werkzeug-/Werkstückhalters bzw. Spannabschnitts auftretende Lunker, Gefügeporen oder anderweitige Fehlstellen stellen keine Kammern im Sinne der Erfindung dar.

Eine solche Kammer kann so beispielsweise ein in Umfangsrichtung ringabschnittsförmiger oder geschlossen ringförmiger Hohlraum im Spannabschnitt sein, der vorzugsweise konzentrisch zur Längsachse des Werkzeug-/Werkstückhalters vollständig im Inneren des Spannabschnitts verläuft.

Solche mehrere, d.h. zwei, drei, vier oder auch noch mehr, Kammern sind beim dem Werkzeug-/Werkstückhalter vorgesehen.

Unter einem Kanal kann ein ebenfalls beliebig, aber definiert (nach vorgebbaren Maßstäben) geformter (Hohl-)Raum verstanden werden, welcher insbesondere in der Lage ist, zumindest zeitweise ein Hydraulikmedium aufzunehmen, hier auch insbesondere in einer Flussrichtung zu führen bzw. zu leiten.

Ein solcher Kanal kann beispielsweise eine radial und/oder axial verlaufende und/oder in Umfangsrichtung (zumindest abschnittsweise) umlaufende Bohrung oder Spalt im Inneren des Spannabschnitts sein.

Insbesondere kann ein Querschnitt eines solchen Kanals bei dem Werkzeug-/Werkstückhalter klein bzw. klein gegenüber einem Querschnitt einer Kammer bei dem Werkzeug-/Werkstückhalter sein.

Besonders zweckmäßig ist es, wenn eine Kanalführung bei dem Kanalsystem platzsparend zwischen den Kammern gelegt wird (, wodurch so schlanke Außenkonturen bei dem Werkzeug-/Werkstückhalter realisierbar sind).

Kammern und Kanalsystem mögen der Einfachheit halber im Folgenden auch insgesamt als Kammersystem bezeichnet werden.

Fluidal kommunizierend kann anschaulich meinen, dass das Kammersystem ein Netzwerk bildet, in welchem ein Hydraulikmedium (hin-und-her) fließen kann und dessen Innendruck zentral gesteuert bzw. eingestellt werden kann, beispielsweise mittels einer Spannschraube/Spannkolbens, wie bekannt bei Hydro-Dehnspannfuttern.

Dabei verstehen sich verwendete Begriffe, wie "axial" und "radial" sowie "Umfangsrichtung", "zentrisch"/"konzentrisch" und "umlaufend" - nach üblichem Verständnis - in Bezug auf eine Längsachse des Werkzeug-/Werkstückhalters. Handelt es sich insbesondere um einen drehbaren Werkzeug-/Werkstückhalter, entspricht die Längsachse auch der Rotationsachse des Werkzeug-/Werkstückhalters.

Das im Inneren des Spannabschnitts ausgebildete Kammersystem ist insbesondere ein geschlossenes, d.h. insbesondere nach außen druckdichtes, System.

Insbesondere können so solche Kammern bzw. kann solches Kammersystem Teil eines (Druck-)Kammersystems eines hydraulischen Spannsystems bei dem hydraulisch spannbaren Werkzeug-/Werkstückhalter (vgl. Hydro-Dehnspannfutter oder hydraulisch spannbare Spanndorne) sein.

In dem Kanalsystem ist eine zentrale Drosselstelle angeordnet mit einem Stellelement, unter Verwendung dessen ein Strömungsquerschnitt in der zentralen Drosselstelle - aktiv - veränderbar ist ("(aktiv) verstellbare Drossel", kurz "verstellbare Drossel").

Auch kann vorgesehen sein, dass mit dem Stellelement an mehreren Stellen in/an der zentralen Drosselstelle Strömungsquerschnitte verändert werden können.

Ein solches Stellelement kann beispielsweise ein Element, wie eine Schraube sein, welches in der zentralen Drosselstelle bzw. in einen Querschnitt der Drosselstelle (oder in mehreren Querschnitten der Drosselstelle) hineinragt (und so in der Lage ist, (bei Positionsveränderung derselben) diesen (bzw. diese) zu verändern). Auch eine elastisch verformbare Wandung bei der zentralen Drosselstelle kann ein solches Stellelement sein.

Unter einer solchen zentralen Drosselstelle bei dem Werkzeug-/Werkstückhalter kann insbesondere ein ein (Hydraulik-)Medium aufnehmbarer (Hohl-)Raum verstanden werden, über welchen dort mündende Zuführungskanäle unmittelbar in Strömungsverbindung stehen. Über diese zentrale Drosselstelle stehen so auch alle Kammern des Kammersystems (mittelbar und/oder unmittelbar) miteinander in der fluidalen Verbindung.

Anschaulich ausgedrückt, über die zentrale Drosselstelle kann ein Hydraulikmedium, beispielsweise ein Öl, insbesondere ein Öl mit hoher Viskosität, in dem Kammersystem (hin-und-her) fließen.

Eine solche zentrale Drosselstelle kann dabei beispielsweise auch eine Kammer, eine Bohrung oder Ähnliches sein. Zweckmä-ßig kann sein, dass ein Querschnitt der zentralen Drosselstelle "von Hause aus" klein ist.

Insbesondere kann auch vorgesehen sein, dass das Kanalsystem mehrere Zuführungskanäle vorsieht, wobei von den mehreren Zuführungskanälen des Kanalsystems jeder nur zu jeweils einer von den Kammern des Kammersystems führt. Ein erstes Zuführungskanalende des jeweiligen Zuführungskanals endet/mündet in der nur einen Kammer; ein zweites Zuführungskanalsende des jeweiligen Zuführungskanals endet/mündet in der zentralen Drosselstelle ("separate Zuführungskanäle").

Vereinfacht und anschaulich ausgedrückt, jede Kammer der durch das Kanalsystem verbundenen mehreren Kammern hat ihren eigenen, separaten Zuführkanal, der nur sie mit der zentralen Drosselstelle verbindet bzw. welche alle in die zentrale Drosselstelle (ähnlich einem zentralen Verbindungspunkt/Kreuzungsstelle) münden.

Hierdurch, d.h. durch solche separate Zuführungskanäle für die Kammern, wird erzwungen, dass ein in dem Kammersystem - zwischen den Kammern - (hin-und-her) fließendes Hydraulikmedium (erzwungenermaßen) über die zentrale Drosselstelle fließt.

Dem hydraulisch spannbaren Werkzeug-/Werkstückhalter liegt die Überlegung zugrunde, dass (- ist das Kammersystem mit Hydraulikmedium, wie Öl, insbesondere einem Öl mit hoher Viskosität, gefüllt) durch eine - mittels des Stellelements bewirkbare - Strömungsquerschnittsveränderung, insbesondere Strömungsquerschnittsverengung, ein Strömungswiderstand für das Hydraulikmedium, beispielsweise das Öl, in der zentralen Drosselstelle verändert, insbesondere erhöht, werden kann ("verstellbare Drossel").

Mit einem solchermaßen veränderten bzw. erhöhten Strömungswiderstand in der zentralen Drosselstelle geht eine dynamische Steifigkeitsveränderung bzw. Steifigkeitserhöhung bei dem hydraulisch spannbaren Werkzeug-/Werkstückhalter einher, stehen die Kammern, welche den Spannabschnitt des Werkzeug-/Werkstückhalters ausmachen, mit ihrem Kanalsystem, insbesondere zwangsweise mit jeweils separaten Zuführungskanälen, über die zentrale Drosselstelle in (fluidaler) Strömungsverbindung.

Kurz und einfach ausgedrückt, lässt sich durch das Stellelement der Strömungsquerschnitt in der zentralen Drosselstelle verringern, kann dadurch der Strömungswiderstand des Hydraulikmediums im Kammersystem und so die dynamische Steifigkeit bei dem Werkzeug-/Werkstückhalter erhöht werden.

Stellt darüber hinaus die zentrale Drosselstelle - mit ihrem einstellbaren Strömungsquerschnitt - eine, insbesondere im Falle separater Zuführungskanäle "erzwungene", Engstelle dar, so kann sich dadurch auch ein Dämpfungseffekt einstellen. Wird nämlich - bei entsprechender Belastung des Werkzeug-/Werkstückhalters (und Auslenkung) - das Hydraulikmedium aus einer Kammer in die zentrale Drosselstelle gepresst bzw. wird dorthin fließen, entsteht durch den engstellenartigen Strömungsquerschnitt in der zentralen Drosselstelle ein Widerstand. Das Hydraulikmedium muss durch diesen gepresst werden. Dabei entstehen hohe Fließgeschwindigkeiten und Reibung, wofür Energie aufgebracht werden muss. Diese Energie wird der aufgebrachten Bewegung (Schwingung) entzogen. Es entsteht ein Dämpfungseffekt, ähnlich wie bei hydraulischen Stoßdämpfern. Die Auslenkung wird vermindert.

Zweckmäßig mag es auch sein, ein Hydraulikmedium bzw. ein Druckmedium zu verwenden, dessen Viskosität bei Druck und/oder Bewegung ansteigt.

Zweckmäßig ist es insbesondere, dass - wegen des komplexen Kammersystems - der Spannabschnitt (oder wesentliche Abschnitt desselben), insbesondere das Kammersystem, durch ein additives Herstellverfahren, beispielsweise durch ein Schichtschmelzverfahren, hergestellt ist/sind bzw. wird.

Ein solches Schichtschmelzverfahren zeichnet sich dadurch aus, dass das Bauteil Schicht für Schicht dadurch hergestellt wird, dass - meist mit Hilfe eines Lasers - auf jede vorhergehende Schicht eine weitere Schicht aus einem meist ursprünglich in Pulverform vorliegenden Metallmaterial aufgeschmolzen oder aufgesintert wird.

So kann bevorzugt der Spannabschnitt beispielsweise aus einzelnen Metallschichten aufgebaut werden/sein, die nacheinander aufeinander aufgetragen werden, bis der Spannabschnitt (oder ein wesentlicher Abschnitt, beispielsweise ein nur örtlich auszubildender hinterschnittiger Bereich) (s-)eine vorgegebene Form aufweist.

Vorzugsweise können dabei die den Spannabschnitt bildenden Metallschichten aus einer Mischung unterschiedlicher oder unterschiedlich legierter Metalle erschmolzen werden.

Auf diese Art und Weise können bestimmte Bereiche des Spannabschnitts werkstoffmäßig für bestimmte Aufgaben ertüchtigt werden. So können lokal besonders beanspruchte Stellen aus einem Werkstoff mit erhöhter Widerstandsfähigkeit gefertigt werden, ohne gleich den gesamten Spannabschnitt aus einem solchen, nicht selten teureren und/oder nur unter erhöhtem Zeitaufwand in die gewünschte Form zu bringenden Material fertigen zu müssen.

Ähnliches gilt für Stellen, von denen beispielsweise eine besonders hohe elektrische und/oder magnetische Leitfähigkeit erwartet wird. Beispielsweise kann dem als Hülsenpartie ausgebildeten Spannabschnitt ein Außenabschnitt verliehen werden, der aus einem Metallmaterial besteht, in dem unter dem Einfluss eines magnetischen Wechselfeldes induktiv Wärme erzeugt werden kann, und sie kann einen einstofflich damit verbundenen, die Werkzeugaufnahme ausbildenden Innenabschnitt erhalten, der aus einem Metallmaterial besteht, das eine höhere Wärmedehnung aufweist als das Material des Außenabschnitts.

D.h., die Zusammensetzung der Metallschichten wird örtlich mehr als nur unwesentlich variiert, derart, dass die Metallschichten örtlich besondere mechanische und/oder elektrische und/oder magnetische Eigenschaften aufweisen.

Zweckmäßig ist es auch, wenn die Querschnitte der Zuführungskanäle gegenüber den Querschnitten von den Kammern klein sind. Kurz, enge Zuführungskanäle (gegenüber breiteren, grö-ßeren Kammern) sind zweckmäßig.

Würde so nämlich dann bei entsprechender Belastung des Werkzeug-/Werkstückhalters (und Auslenkung) das Hydraulikmedium aus einer Kammer in den engen Zuführungskanal gepresst werden bzw. dorthin fließen, entsteht durch den engen Kanalquerschnitt ein Widerstand. Das Hydraulikmedium muss durch den Kanal gepresst werden. Dabei entstehen hohe Fließgeschwindigkeiten und Reibung, wofür Energie aufgebracht werden muss. Diese Energie wird der aufgebrachten Bewegung (Schwingung) entzogen. Es entsteht ein Dämpfungseffekt, ähnlich wie bei hydraulischen Stoßdämpfern. Die Auslenkung wird vermindert.

Erwärmt sich durch die Energie, welche der Schwingung entzogen wird, der Spannabschnitt des Werkzeug-/Werkstückhalters, so wird diese Wärme an die Umgebung abgegeben.

Insbesondere kann es zweckmäßig sein, wenn das Kammersystem Teil eines Spannorgans bei einem hydraulisch spannbaren Werkzeughalter, wie einem Hydro-Dehnspannfutter, bzw. Werkstückhalter, wie einem hydraulisch spannbaren Spanndorn, ist. D.h., wenn die zentrale Drosselstelle eine Spannkammer und/oder das Stellelement eine Spannschraube/-kolben eines hydraulischen Spannsystems bei dem hydraulisch spannbaren Werkzeug-/Werkstückhalter sind/ist.

Kurz vereinfacht ausgedrückt, die verstellbare Drossel/die zentrale Drosselstelle ist eins mit der Spannkammer bzw. das Stellelement und die Spannschraube/-kolben sind eins.

Bei Betätigung der Spannschraube/-kolben, wird das Hydraulikmedium (in bekannter Weise) in das hydraulische Spannsystem bzw. das (Druck-)Kammersystem/die (Druck-)Kammern gepresst, wodurch sich der Spannabschnitt verformt Der Spannabschnitt wird ("nach außen oder nach innen") gespannt. Gegen Ende des Spannvorgangs können dann die - in die zentrale Drosselstelle bzw. die Spannkammer mündenden - Zuführungskanäle durch die Spannschraube/das Stellelement nahezu verschlossen sein.

Wird das Stellelement vollständig eingeschraubt - und können dann die Zuführungskanäle durch die Spannschraube/das Stellelement verschlossen sein, so bilden sich dadurch separate, geschlossene Kammern aus, welche zu höherer Steifigkeit bei dem Werkzeug-/Werkstückhalter führen.

Die Drosselwirkung entsteht durch einen geringen verbleibenden Restquerschnitt zwischen der Spannschraube/dem Stellelement und den - in die zentrale Drosselstelle bzw. die Spannkammer mündenden - Zuführungskanälen.

Die Zuführungskanäle selbst können dabei hier auch einen relativ großen Querschnitt haben, was wegen einer einfacheren Fertigung vorteilhaft ist.

Zweckmäßig ist es auch, wenn das Kammersystem inklusive des Stellelements, kurz das Gesamtsystem, keine Unwucht aufweist bzw. feingewuchtet ist. Besonders zweckmäßig ist es dabei, wenn die Kammern und/oder die Kanäle symmetrisch angeordnet sind. Unwuchten aus dem Stellelement können durch die Gestaltung des Kammersystems und/oder andere "Unwuchtelemente", wie weitere Hohlräume, ausgeglichen werden.

Das Stellelement bzw. die Spannschraube muss nicht zwangsläufig bis in eine Endstellung gedreht werden. Sie kann so gestaltet sein, dass der Drosselquerschnitt je nach Stellung des Stellelements bzw. der Spannschraube veränderlich ist.

Bei Belastung durch ein - in dem Werkzeug-/Werkstückhalter eingespanntes - Werkzeug/Werkstück kann das Hydraulikmedium von belasteten (Druck-)Kammern aus durch die jeweiligen Zuführungskanäle in Richtung der zentralen Drosselstelle bzw. der Spannkammer fließen. Hier wird der Fluss durch die Engstellen (von Zuführungskanal und/oder zentraler Drosselstelle) gedrosselt. Von der Spannkammer bzw. der zentralen Drosselstelle aus kann das Hydraulikmedium weiter in die Zuführungskanäle zu den jeweils entlasteten (Druck-)Kammern wiederum durch die Engstellen fließen. Es entsteht so der doppelte Drosseleffekt - mit dynamischer Steifigkeitserhöhung und Dämpfungswirkung.

Zweckmäßig, insbesondere bei mehreren oder vielen Kammern in dem Spannabschnitt, kann es sein, mindestens zwei Kanalsysteme gemäß dem beschriebenen Kanalsystem vorzusehen, wobei dann die Strömungsquerschnitte der - dann - mindestens zwei zentralen Drosselstellen der mindestens zwei Kanalsysteme unter Verwendung eines (nur) einzigen gemeinsamen Stellelements veränderbar sein können.

Kurz, ein einziges Stellelement "bedient/verändert" die mindestens zwei Drosselstellen der mindestens zwei Kanalsysteme (- und kann deren Strömungsquerschnitte verändern).

D.h., verfügt der Werkzeug-/Werkstückhalter bzw. der Spannabschnitt über viele (Druck-)Kammern (und ist es so unter Umständen aus Platzgründen nicht möglich, alle Zuführungskanäle in eine einzige zentrale Drosselstelle münden zu lassen), so kann bevorzugt vorgesehen sein, das ("ursprünglich" nur) eine Kanalsystem (mit der Vielzahl von Zuführungskanälen) - auf zwei (oder mehrere) Kanalsysteme (mit entsprechend reduzierter Anzahl von jeweiligen, insbesondere individuellen/separaten, Zuführungskanälen) "aufzuteilen".

Ergeben sich dann dabei - entsprechend der Aufteilung - zwei oder mehrere zentrale Drosselstellen - so kann es insbesondere zweckmäßig sein, (anstelle möglicher zwei oder mehrerer Stellelemente) weiterhin "nur" ein einziges Stellelement vorzusehen, welches die Strömungsquerschnitte der nun zwei oder mehreren zentralen Drosselstellen, insbesondere gleichzeitig, verändert.

Besonders zweckmäßig kann es hier auch sein, die zwei oder mehreren zentralen Drosselstellen (in Bezug auf die Längsachse des Werkzeug-/Werkstückhalters) radial versetzt zueinander, insbesondere auf gleicher axialer Höhe, - im Spannabschnitt - anzuordnen.

Über ein radial einführbares Stellelement, beispielsweise eine - über eine radiale Bohrung - radial (von außen) in den Spannabschnitt einschraubbare Stellschraube, können dann die Strömungsquerschnitte bei den (in Bezug auf die Längsachse des Werkzeughaltgers) radial versetzt zueinander bzw. (in Bezug auf eine solche Stellschraube) axial zueinander versetzt angeordnete zentrale Drosselstellen (gleichzeitig) verändert werden.

Dabei mag die Einschraubrichtung des Stellelements auch seitlich versetzt zur Längsachse des Werkzeug-/Werkstückhalters sein.

Nach außen kann dabei eine solche Bohrung mittels Dichtelemente - zwischen der Bohrung und dem Stellelement bzw. der Stellschraube - abgedichtet sein.

Die Aufteilung der vielen (Druck-)Kammern auf eine zwei oder mehrere Kanalsysteme kann dabei nach konstruktiven und/oder baulichen Anforderungen/Gegebenheiten erfolgen. Insbesondere eine unter baulichen Gegebenheiten einfache und platzsparende Kanalführung ist zweckmäßig.

Weiterhin kann auch vorgesehen sein, die Kammern strukturiert, insbesondere symmetrisch und/oder in regelmäßiger Struktur, im Spannabschnitt anzuordnen, wodurch sich ein gleichmäßiges und zentriertes Spannen eines Werkzeugs/Werkstücks im Werkzeug-/Werkstückhalter bzw. im Spannbereich realisieren lässt.

Eine solche Struktur kann beispielsweise auch darin bestehen, dass die Kammern in Umfangsrichtung, insbesondere konzentrisch zur Längsachse des Werkzeug-/Werkstückhalters, gleichmäßig verteilt in dem Spannabschnitt angeordnet sind und/oder dass die Kammern in einer oder mehreren Normalebenen zur Längsachse des Werkzeug-/Werkstückhalters im Spannabschnitt angeordnet sind. Sind mehrere Normalebenen für die Kammern vorgesehen, können diese insbesondere auch in jeweils gleichem axialen Abstand zueinander angeordnet sein. Hierdurch lässt sich insbesondere eine hohe Wuchtgüte erreichen.

Zahlreiche Ausgestaltungen für Kammerstrukturen sind beispielsweise aus der DE 10 2013 103 168 B3 bekannt.

Weiterhin kann es zweckmäßig sein, wenn das Stellelement, insbesondere das eine einzige Stellelement im Falle zwei oder mehrerer zentraler Drosselstellen eine konische bzw. mehrere konische Abschnitte aufweist. Zwischen konischen Abschnitten können dabei zylindrische Abschnitte ausgebildet sein.

Erfolgt die Strömungsquerschnittsänderung dann über eine Positionsverschiebung dieses konischen Abschnitts bzw. dieser konischen Abschnitte in der zentralen Drosselstelle bzw. in den zentralen Drosselstellen, so lässt sich so eine sehr "feinfühlige" und kontinuierliche dynamische Steifigkeitsveränderung/-anpassung bewerkstelligen.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert wird/werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: einen Schnitt durch einen Spannabschnitt eines hydraulisch spannbaren Werkzeughalters gemäß einer ersten Ausführung;
- FIG 2: einen Schnitt durch einen Spannabschnitt eines hydraulisch spannbaren Werkzeughalters gemäß einer zweiten Ausführung;
- FIG 3: einen Schnitt durch einen Spannabschnitt eines hydraulisch spannbaren Werkzeughalters gemäß einer dritten Ausführung;
- FIG 4: einen Ausschnitt des Werkzeughalters gemäß FIG 3 mit einer Stellschraube für zwei zentrale Drosselstellen;
- FIG 5: einen Ausschnitt eines abgewandelten Werkzeughalters mit einer integrierten Stell-/Spannschraube;
- FIG 6: einen Schnitt durch einen Spannabschnitt eines hydraulisch spannbaren Werkstückhalters gemäß einer Ausführung.

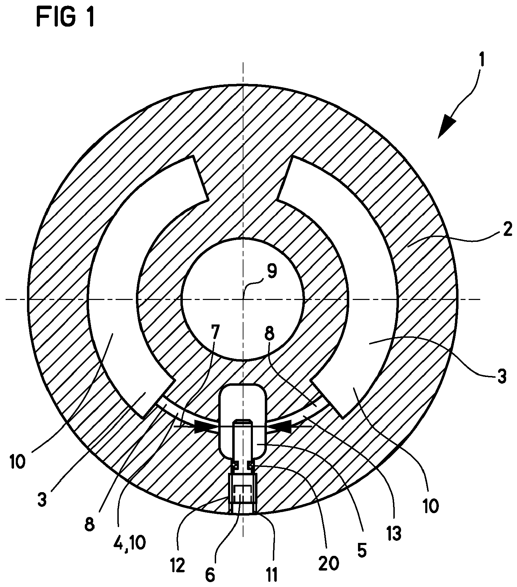

Die nachfolgend beschriebenen Ausführungsformen nach den Figuren 1 bis 5 betreffen hydraulisch spannbare Werkzeughalter 1 (kurz im Folgenden nur Werkzeughalter 1), welche im Allgemeinen auch unter Hydro-Dehnspannfutter bekannt sind. Mittels solcher Werkzeughalter werden Werkzeuge, wie Fräser, hydraulisch eingespannt (nicht dargestellt).

Zu diesem Zweck ist innerhalb einer Hülsenpartie, im Folgenden auch Spannabschnitt 2 genannt, eines solchen Werkzeughalters 1 ein hydraulisches Spannorgan angeordnet, welches bei Beaufschlagung mit hydraulischem Druck, beispielsweise aufbau-/bewirkbar über ein Hydraulikmedium, wie Öl, seinen den Werkzeugschaft umgreifenden Innendurchmesser verringert und so den Werkzeugschaft reibschlüssig einspannt.

Die Spannabschnitte 2 der nachfolgend beschriebenen Werkzeughalters 1 sind mittels eines Schichtschmelzverfahrens, hergestellt.

**Fig. 1** zeigt einen (bezüglich der Längsachse 9 (auch Rotationsachse) des hydraulisch spannbaren Werkzeughalters 1) Normalschnitt durch den Spannabschnitt 2 eines solchen Werkzeughalters 1.

Im Inneren des Spannabschnitts 2 sind, wie Fig. 1 zeigt, zwei (getrennte/separate) symmetrische, konzentrisch zur Längsachse 9 ringabschnittsförmige (Druck-)Kammern 3 ausgebildet, welche sich auch axial konzentrisch der Längsachse 9 des Werkzeughalters im Spannabschnitt 2 erstrecken.

Die zwei Kammern 3 sind, wie Fig. 1 auch zeigt, über ein (in der Schnittebene liegendes) Kanalsystem 4 miteinander fluidtechnisch verbunden. D.h., über das Kanalsystem 4 (und der nachfolgend beschriebenen zentralen Drosselstelle 5) stehen die zwei Kammern fluidal miteinander in Verbindung; ein Hydraulikmittel-/fluid 10, wie Öl, kann über das Kanalsystem 4 (und der zentralen Drosselstelle 5) zwischen den zwei Kammern 3 hin-und-her fließen.

Die Kammern 3 sowie das Kanalsystem 4 bilden so auch das Kammersystem 13 bei dem Werkzeughalter 1 aus.

Wie Fig. 1 auch zeigt, sieht das Kanalsystem 4 zwei Zuführungskanäle 8 - in Form von konzentrischen, abschnittsweise umlaufenen Bohrungen - vor, deren jeder eine von den zwei Kammern 3 mit einer zentralen (Drossel-)Stelle 5 im Kanalsystem 4 verbindet ("separate Zuführungskanäle"), über welche zentrale Drosselstelle 5 so das Hydraulikmittel 10 zwischen den zwei Kammern 3 hin-und-her fließen kann (bzw. muss).

Die zentrale Drosselstelle 5 ist, wie in Fig. 1 auch dargestellt, als radial verlaufender zylindrischer Hohlraum ausgebildet, in welchen die zwei Zuführungskanäle 8 der Kammern 3 seitlich münden.

In den Hohlraum bzw. die zentrale Drosselstelle 5 ragt ein in seiner Position verstellbares Stellelement 6 - in Form einer Stellschraube.

Über eine die zentrale Drosselstelle 5 nach Außen verbindende radiale Bohrung 11 mit Innengewinde 12 kann die Stellschraube 6 in die Bohrung 11 und so in den Hohlraum/zentrale Drosselstelle 5 ein-/ausgeschraubt werden. Über die Stellschraube 6 ist so auch das Kanalsystem 4 nach außen druckdicht abgeschlossen. Dazu kann auch eine Dichtung 20 vorgesehen sein.

Der Durchmesser der Stellschraube 5 (und so auch der radialen Bohrung 11 mit Innengewinde 12) ist dabei kleiner als der Durchmesser der zentralen Drosselstelle/Hohlraum 5, wodurch ein "Hin-und-Her-Fließen" des Hydraulikmediums 10 im Kammersystem 13 - bei veränderlichem Strömungswiderstand in der zentralen Drosselstelle 5 - gewahrt bleibt.

Durch Ein- bzw. Ausschrauben der Stellschraube verändert sich der Strömungsquerschnitt 7 in der zentralen Drosselstelle 5 - ohne allerdings die Strömung im Kanalsystem 4 über die zentrale Drosselstelle 5 komplett zu unterbinden.

Das Innere der zentralen Drosselstelle 5 kann, anders als dargestellt, auch (zumindest abschnittsweise) als radial verlaufender Hohlkegel ausgebildet sein. Auch kann die Stellschraube 6 (zumindest abschnittsweise) (entsprechend zu dem Hohlkegel) kegel-/konusförmig ausgebildet sein.

Ungeachtet des die zwei Kammern 3 verbindenden Kanalsystems 4 und dessen in ihrem Strömungsquerschnitt mittels der Stellschraube 6 einstellbare/veränderbare Drosselstelle 5 sieht das Kammersystem des Werkzeughalters 1 auch eine (an sich übliche) mit dem Kammersystem auch in fluidaler Verbindung stehende Druckkammer (nicht dargestellt) mit dortig angeordneter, von außen betätigbarer Spannschraube/-kolben vor - zum Druckaufbau zum/und Spannen des Werkzeughalters 1 (nicht dargestellt).

Dazu kann beispielsweise eine der zwei Kammern 3 des Werkzeughalters 1 über einen weiteren (Druck-)Kanal mit der Spannkammer verbunden sein (nicht dargestellt).

Durch Betätigung der Spannschraube/-kolben wird das Hydraulikmittel in das Kammersystem 13 gepresst und (Spann-)Druck aufgebaut, wodurch sich der Spannabschnitt 2, d.h. speziell eine Innenwand der Hülsenpartie zur Aufnahmeöffnung hin nach innen wölbt.

Dem Werkzeughalter 1 liegt die Überlegung zugrunde, dass durch die - mittels der Stellschraube 6 bewirkbare - Strömungsquerschnittsveränderung, insbesondere Strömungsquerschnittverengung, in/an der zentralen Drosselstelle 5 der Strömungswiderstand für das Hydraulikmedium 10 in/an der zentralen Drosselstelle 5 verändert, insbesondere erhöht, werden kann ("verstellbare Drossel").

Mit einem solchermaßen veränderten bzw. erhöhten Strömungswiderstand in/an der zentralen Drosselstelle 5 geht eine dynamische Steifigkeitsveränderung bzw. Steifigkeitserhöhung bei dem Werkzeughalter 1 einher, stehen die Kammern 3, welche den Spannabschnitt 2 des Werkzeughalters 1 ausmachen, (durch die separaten Zuführungskanäle erzwungenermaßen) mit ihrem Kanalsystem 4 über die zentrale Drosselstelle 5 in (fluidaler) Strömungsverbindung.

Sind darüber hinaus auch, wie Fig. 1 zeigt, die Querschnitte der Zuführungskanäle 8 gegenüber solchen von den Kammern 3 klein (entsprechendes gilt auch für die zentrale Drosselstelle 5), so wird - bei entsprechender Belastung des Werkzeughalters 1 (und Auslenkung) - das Hydraulikmedium aus der einer Kammer 3 in ihren engen Zuführungskanal 8 gepresst, wobei durch den engen Kanalquerschnitt ein Widerstand entsteht. Das Hydraulikmedium 10 muss durch den Zuführungskanal 8 gepresst werden. Dabei entstehen hohe Fließgeschwindigkeiten und Reibung, wofür Energie aufgebracht werden muss. Diese Energie wird der aufgebrachten Bewegung (Schwingung) entzogen. Es entsteht ein Dämpfungseffekt, ähnlich wie bei hydraulischen Stoßdämpfern. Die Auslenkung wird vermindert.

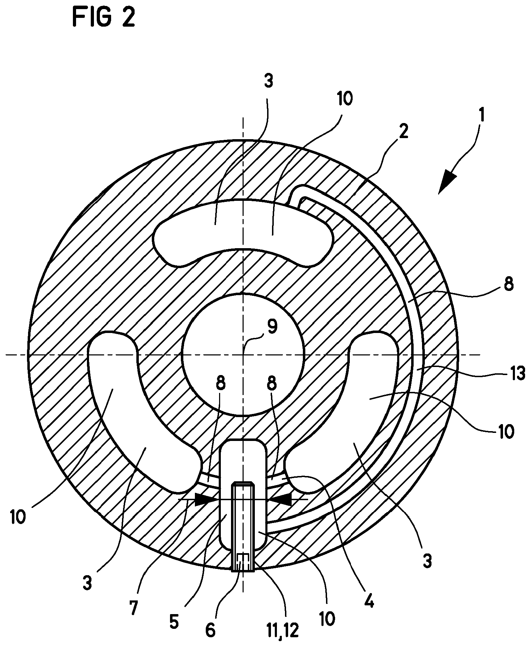

**Fig. 2** zeigt eine weitere Ausführung des Werkzeughalters 1 - wiederum im Normalschnitt durch den Spannabschnitt 2 des Werkzeughalters 1.

Diese Ausführung unterscheidet sich von der ersten Ausführung (nach Fig. 1) lediglich durch die Ausgestaltung des Kammersystems 13.

Ansonsten ist der Werkzeughalter 1 wie bei der zuvor ausführlich beschriebenen Ausführung aufgebaut, so dass einander entsprechende Teile auch mit denselben Bezugszeichen versehen sind. Bezüglich deren Beschreibung wird auf die erste Ausführung verwiesen. Entsprechende Effekte, wie beim Werkzeughalter 1 nach der ersten Ausführung, stellen sich auch hier ein.

Im Inneren des Spannabschnitts 2 des Werkzeughalters 1 sind, wie Fig. 2 zeigt, drei (getrennte/separate) konzentrisch zur Längsachse 9 gleichverteilte, ringabschnittsförmige (Druck-)Kammern 3 ausgebildet, welche sich auch axial der Längsachse 9 des Werkzeughalters im Spannabschnitt 2 erstrecken.

Die drei Kammern 3 sind über ein (in der Schnittebene liegendes) Kanalsystem 4 miteinander fluidtechnisch verbunden. D.h., über das Kanalsystem 4 (und der zentralen Drosselstelle 5) stehen die drei Kammern 3 fluidal miteinander in Verbindung; ein Hydraulikmittel-/fluid 10, wie Öl, kann über das Kanalsystem 4 (und der zentralen Drosselstelle 5) zwischen den drei Kammern 3 hin-und-her fließen.

Die Kammern 3 sowie das Kanalsystem 4 bilden auch hier wieder das Kammersystem 13 bei dem Werkzeughalter 1 aus.

Wie Fig. 2 auch zeigt, sieht das Kanalsystem 4 drei Zuführungskanäle 8 - in Form von konzentrischen, abschnittsweise umlaufenden Bohrungen - vor, deren jede eine von den drei Kammern 3 mit einer zentralen (Drossel-)Stelle 5 im Kanalsystem 4 verbindet ("separate Zuführungskanäle"), über welche zentrale Drosselstelle 5 so das Hydraulikmittel 10 zwischen den drei Kammern 3 hin-und-her fließen kann (bzw. muss).

Die zentrale Drosselstelle 5 ist, wie in Fig. 2 auch dargestellt, als radial verlaufender zylindrischer Hohlraum ausgebildet, in welchen die drei Zuführungskanäle 8 der Kammern 3 seitlich münden.

In den Hohlraum bzw. die zentrale Drosselstelle 5 ragt ein in seiner Position verstellbares Stellelement 6 - in Form einer Stellschraube.

Über eine die zentrale Drosselstelle 5 nach außen verbindende radiale Bohrung 11 mit Innengewinde 12 kann die Stellschraube 6 in die Bohrung 11 und so in den Hohlraum/zentrale Drosselstelle 5 ein-/ausgeschraubt werden. Über die Stellschraube 6 ist so auch das Kanalsystem 4 nach außen druckdicht abgeschlossen.

Der Durchmesser der Stellschraube 5 (und so auch der radialen Bohrung 11 mit Innengewinde 12) ist dabei kleiner als der Durchmesser der zentralen Drosselstelle/Hohlraum 5.

Durch Ein- bzw. Ausschrauben der Stellschraube verändert sich der Strömungsquerschnitt 7 in der zentralen Drosselstelle 5 - ohne allerdings die Strömung im Kanalsystem 4 über die zentrale Drosselstelle 5 komplett zu unterbinden.

Auch hier wieder stellen sich so die besonderen dynamischen Steifigkeits- und Dämpfungseigenschaften bei dem Werkzeughalter 1 ein.

Alternativ zu dieser zweiten Ausführung kann auch vorgesehen sein, eine von den drei Kammern 3 nur mittelbar - über eine zweite der drei Kammern 3 - mit der zentralen Drosselstelle 5 zu verbinden (nicht dargestellt). In diesem Fall wäre dann der Zuführungskanal 8 dieser einen, mittelbar verbundenen Kammer 3 mit der zweiten Kammer 3 verbunden - und nicht (unmittelbar) mit der zentralen Drosselstelle 5.

Darüber hinaus können - weiter alternativ - auch vier oder noch mehr über solche Kanalsysteme 4 und der zentralen Drosselstelle 5, wie beschrieben, miteinander verbundenen Kammern 3 bei einem Werkzeughalter 1 vorgesehen sein.

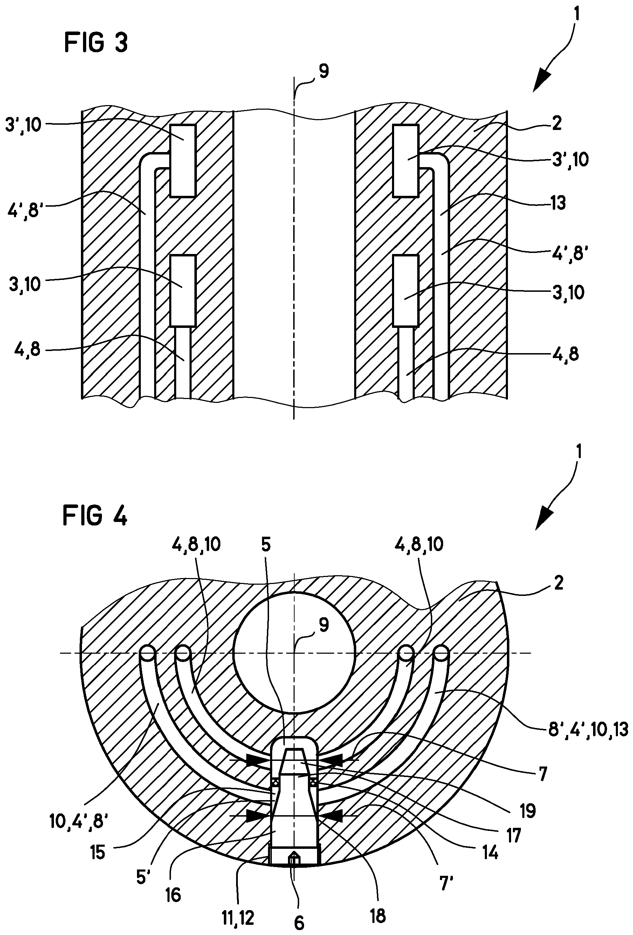

**Fig. 3** zeigt wieder eine weitere Ausführung des Werkzeughalters 1 - diesmal in einem schematischen Längs-/Axialschnitt durch den Spannabschnitt 2 des Werkzeughalters 1. **Fig. 4** zeigt einen zugehörigen Ausschnitt des Werkzeughalters nach Fig. 3 im Normalschnitt.

Diese Ausführung unterscheidet sich ebenfalls von der ersten Ausführung (nach Fig. 1) durch die Ausgestaltung des Kammersystems 13, weist dieses in diesem Fall zwei Kanalsysteme 4 und 4' auf (Komponenten des zweiten Kanalsystems sind mit "'" gekennzeichnet).

Ansonsten ist der Werkzeughalter 1 wie bei der zuvor ausführlich beschriebenen Ausführung aufgebaut, so dass einander entsprechende Teile (auch solche mit "'") auch mit denselben Bezugszeichen versehen sind. Bezüglich deren Beschreibung wird auf die erste Ausführung verwiesen. Entsprechende Effekte, wie beim Werkzeughalter 1 nach der ersten Ausführung, stellen sich auch hier ein.

Im Inneren des Spannabschnitts 2 des Werkzeughalters 1 sind, wie Fig. 3 zeigt, - in zwei axialen Höhen/Ebenen - jeweils zwei (getrennte/separate) konzentrisch zur Längsachse 9 gleichverteilte, ringabschnittsförmige (Druck-)Kammern 3 und 3*'* ausgebildet, welche sich auch axial der Längsachse 9 des Werkzeughalters im Spannabschnitt 2 erstrecken (vgl. ähnlich wie in Fig. 1 für eine axiale Höhe/Ebene).

Die jeweils zwei Kammern 3 bzw. 3'einer axialen Höhe sind jeweils über ein Kanalsystem 4 und 4*'* miteinander fluidtechnisch verbunden (vgl. Fig. 3 und Fig. 4). D.h., über das Kanalsystem 4 bzw. 4*'* (und der jeweiligen zentralen Drosselstelle 5 bzw. 5') stehen die zwei Kammern 3 bzw. 3*'*einer axialen Höhe fluidal miteinander in Verbindung; ein Hydraulikmittel-/fluid 10, wie Öl, kann über das Kanalsystem 4 bzw. 4' (und zentraler Drosselstelle 5 bzw. 5*'*) zwischen den Kammern 3 bzw. 3*'* (jeweils einer axialen Höhe/Ebene) hin-und-her fließen.

Die Kammern 3/3*'* sowie das Kanalsystem 4/4*'* bilden auch hier wieder das Kammersystem 13 bei dem Werkzeughalter 1 aus.

Wie Fig. 3 auch zeigt, sieht das Kanalsystem 4 bzw. 4' (jeweils) zwei Zuführungskanäle 8 bzw. 8*'* - in Form von abschnittweise axial verlaufende und weiter konzentrische, abschnittsweise umlaufene Bohrungen - vor, deren jeder eine von den zwei Kammern 3 bzw. 3*'* mit der jeweiligen zentralen (Drossel-)Stelle 5 bzw. 5*'* im Kanalsystem 4 bzw. 4' verbindet (Fig.3 und Fig. 4), über welche zentrale Drosselstelle 5 bzw. 5*'* so das Hydraulikmittel 10 zwischen den zwei Kammern 3 bzw. 3*'* hin-und-her fließen kann.

Die zwei zentralen Drosselstellen 5 und 5*'* sind, wie in Fig. 4 dargestellt, als (gemeinsamer) radial verlaufender zylindrischer Hohlraum 15 ausgebildet, in welchen die jeweils zwei Zuführungskanäle 8 bzw. 8*'* der Kammern 3 und 3*'* seitlich münden.

In den (einen gemeinsamen) Hohlraum 15 bzw. die zwei zentralen Drosselstellen 5 und 5*'* ragt ein in seiner Position verstellbares gemeinsames Stellelement 6 - in Form einer Stellschraube.

Mittels einer Dichtung 14, welche in dem gemeinsamen Hohlraum 15 - radial - zwischen den zwei zentralen Drosselstellen 5 und 5*'* angeordnet ist, sind die zwei Kanalsysteme 4 und 4' gegeneinander abgedichtet und getrennt. Das sich im Kammersystem 13 befindliche Hydraulikmedium 10 kann so nur jeweils im einen Kanalsystem 4 bzw. 4' zwischen den diesbezüglichen zwei Kammern 3 bzw. 3*'* über die zentrale Drosselstelle 5 bzw. 5*'* hin-und-her fließen; nicht aber zwischen den zwei Kanalsystemen 4 und 4'.

Über eine den gemeinsamen Hohlraum 15 nach außen verbindende radiale Bohrung 11 mit Innengewinde 12 kann die Stellschraube 6 in die Bohrung 11 und weiter in den gemeinsamen Hohlraum 15 bzw. die zwei zentralen Drosselstellen 5 und 5*'* ein-/ausgeschraubt werden. Über die Stellschraube 6 sind so auch das Kammersystem 13 bzw. die Kanalsysteme 4 und 4"nach außen druckdicht abgeschlossen.

Die gemeinsame Stellschraube 5 weist, wie Fig. 4 verdeutlicht, abschnittsweise zylindrische (16, 17) und (im Wechsel mit den zylindrischen Abschnitten 16, 17) konische Abschnitte (18, 19) auf, wobei die gemeinsame Stellschraube 6 (in Bezug auf den gemeinsamen Hohlraum 15) derart ausgebildet ist, dass die konischen Abschnitte 18 und 19 (weitestgehend unabhängig von der Einschraubtiefe der gemeinsamen Stellschraube 5 in den gemeinsamen Hohlraum 15) im Bereich der Einmündungen der Zuführungskanäle 8 und 8*'* in den gemeinsamen Hohlraum 15 liegen.

Die die zwei Kanalsysteme 4 und 4' gegeneinander abdichtende Dichtung 14 liegt an dem zylindrischen Abschnitt 17 der gemeinsamen Stellschraube 5 an, welcher zwischen den zwei konischen Abschnitten 18 und 19 der gemeinsamen Stellschraube 5 ausgebildet ist.

Die gemeinsame Stellschraube 5 ist weiter derart - in ihrer Länge - ausgebildet, dass, ist die vollständig in den gemeinsamen Hohlraum 15 eingeschraubt, ein Abstand zum Hohlraumgrund verbleibt.

Zumindest im Bereich der konischen Abschnitte 18 und 19 sowie des dazwischenliegenden zylindrischen Abschnitts 17 der gemeinsamen Stellschraube 5 sind die Durchmesser der Stellschraube 5 kleiner als der Durchmesser des gemeinsamen Hohlraums 15 bzw. zentralen Drosselstellen 5 und 5*'*. D.h., es verbleibt ein Spalt zwischen gemeinsamer Stellschraube 6 und gemeinsamen Hohlraum 15 (im Bereich der zentralen Drosselstellen 5 und 5*'*), worüber das Hydraulikmedium zwischen den Kammern 3 bzw. 3*'* des jeweiligen Kanalsystems 4 bzw. 4*'* hin-und-her fließen kann.

Durch Ein- bzw. Ausschrauben der gemeinsamen Stellschraube 6 verändern sich die Strömungsquerschnitte 7 und 7' in den zentralen Drosselstellen 5 und 5*'* - ohne allerdings die Strömungen in den Kanalsystemen 4 und 4' über die zentrale Drosselstellen 5 und 5*'* komplett zu unterbinden.

Auch hier wieder stellen sich so die besonderen dynamischen Steifigkeits- und Dämpfungseigenschaften bei dem Werkzeughalter 1 ein.

Alternativ zu dieser Kammerstruktur bei dem Werkzeughalter 1 nach Fig. 3 und Fig. 4, können auch Kammerstrukturen mit mehr als zwei Kammern 3 (3*'*) pro axialer Ebene, mehr als zwei Kammerebenen, anderen Zuführungskanalverläufen im Spannbereich 2 und/oder beliebig andere, auch unsymmetrische Kammeranordnungen (mit auch unsymmetrisch verteilten Kammern 3 (3*'*)) vorgesehen sein.

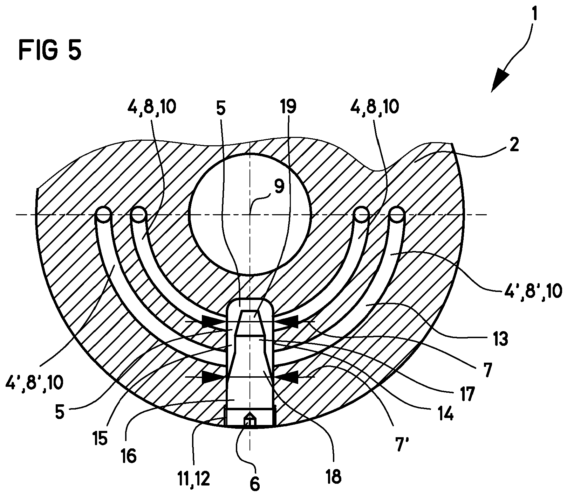

**Fig. 5** zeigt eine Abwandlung der Ausführung des Werkzeughalters 1 nach den Fig.en 3 4, welcher abgewandelte Werkzeughalter in Bezug auf sein Kammersystem 13 mit dem nach Ausführung des Werkzeughalters 1 nach den Fig.en 3 und 4 identisch ist (Anzahl/Anordnung/Verbindung der Kammern), so dass einander entsprechende Teile (auch solche mit "'") auch mit denselben Bezugszeichen versehen sind. Bezüglich deren Beschreibung wird auf die erste Ausführung verwiesen. Entsprechende Effekte, wie beim Werkzeughalter 1 nach der ersten Ausführung, stellen sich auch hier ein.

Die Abwandlung erfährt die Ausführung des Werkzeughalters 1, wie Fig. 5 verdeutlicht, in Bezug auf die Ausgestaltung des gemeinsamen Hohlraumes 15, welcher hier als integrierte Spannkammer/zentrale Drosselstelle 5 (strukturell und funktionell) ausgebildet ist.

Die gemeinsame Stellschraube 6 wird so auch zur Spannschraube (mit Spannkolben) des Spannsystems des Werkzeughalters 1.

Wie Fig. 5 (entsprechend Fig. 4) zeigt, fehlt (gegenüber Fig. 4 bzw. der Ausführung des Werkzeughalters 1 nach Fig. 4) im gemeinsamen Hohlraum 15 die Dichtung 14, wodurch über den gemeinsamen Hohlraum 15 alle Kammern 3 und 3*'* (unmittelbar) in Fluidverbindung stehen. Das Hydraulikmedium 10 kann zwischen allen Kammern 3 und 3'- über den gemeinsamen Hohlraum 15 (so auch wieder nur eine zentrale Drosselstelle 5 bzw. 5*'* anstelle zweier zentraler Drosselstellen 5 und 5') - hin-und-her fließen (entsprechend so auch ein Kanalsystem 4 bzw. 4' anstelle zweier 4 und 4').

Bei Betätigung der gemeinsamen Stellschraube 6 (jetzt auch Spannschraube/-kolben), wird das Hydraulikmedium 10 (in bekannter Weise) in das hydraulische Spannsystem, d.h. das Kammersystem 13 gepresst, wodurch - in diesem Fall bei dem Werkzeughalter 1 - die Strömungsquerschnittsverkleinerung im gemeinsamen Hohlraum 15 bewirkt wird. Der Spannabschnitt 2 wird gespannt.

Die gleichzeitige Drosselwirkung entsteht hierbei durch den geringen verbleibenden Restquerschnitt zwischen der gemeinsamen Stellschraube 6 und den - in den gemeinsamen Hohlraum 15 bzw. die zentrale Drosselstelle 5 (5') mündenden - Zuführungskanäle 8 bzw. 8'.

Alternativ zu den nach den Figuren 1 bis 5 vorgesehenen Werkzeughaltern, können diese Ausführungen auch als Werkstückhalter vorgesehen sein.

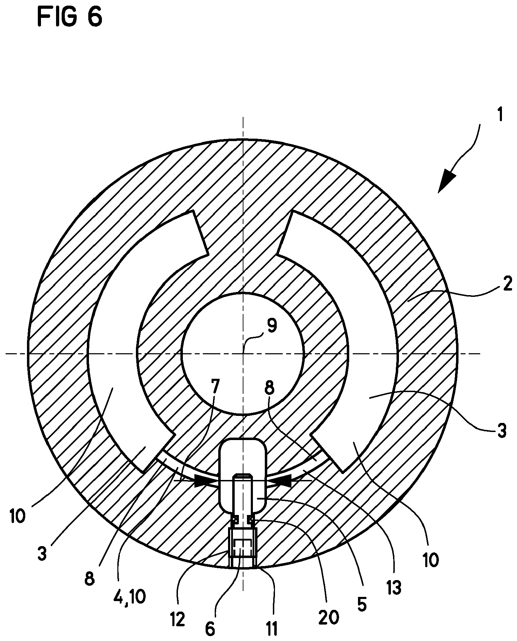

Die nachfolgend beschriebene beispielhafte Ausführungsform nach Figur 6 betrifft einen hydraulisch spannbaren Werkstückhalter 1 (kurz im Folgenden nur Werkstückhalter 1), welcher im Allgemeinen auch als hydraulisch spannbarer Spanndorn bekannt ist. Mittels einem solchem Werkstückhalter werden Werkstücke hydraulisch eingespannt bzw. gehalten (nicht dargestellt) .

Zu diesem Zweck ist innerhalb einer Hülsenpartie, im Folgenden auch Spannabschnitt 2 genannt, eines solchen Werkstückhalters 1 ein hydraulisches Spannorgan angeordnet, welches bei Beaufschlagung mit hydraulischem Druck, beispielsweise aufbau-/bewirkbar über ein Hydraulikmedium, wie Öl, seinen Außendurchmesser vergrößert und so das - auf der Hülsenpartie sitzende Werkstück reibschlüssig spannt.

Der Spannabschnitt 2 des nachfolgend beschriebenen Werkstückhalters 1 ist vorzugsweise mittels eines Schichtschmelzverfahrens, hergestellt.

**Fig. 6** zeigt einen (bezüglich der Längsachse 9 des hydraulisch spannbaren Werkstückhalters 1) Normalschnitt durch den Spannabschnitt 2 eines solchen Werkstückhalters 1.

Im Inneren des Spannabschnitts 2 sind, wie Fig. 6 zeigt, zwei (getrennte/separate) symmetrische, konzentrisch zur Längsachse 9 ringabschnittsförmige (Druck-)Kammern 3 ausgebildet, welche sich auch axial konzentrisch der Längsachse 9 des Werkstückhalters im Spannabschnitt 2 erstrecken.

Die zwei Kammern 3 sind, wie Fig. 6 auch zeigt, über ein (in der Schnittebene liegendes) Kanalsystem 4 miteinander fluidtechnisch verbunden. D.h., über das Kanalsystem 4 (und der nachfolgend beschriebenen zentralen Drosselstelle 5) stehen die zwei Kammern fluidal miteinander in Verbindung; ein Hydraulikmittel-/fluid 10, wie Öl, kann über das Kanalsystem 4 (und der zentralen Drosselstelle 5) zwischen den zwei Kammern 3 hin-und-her fließen.

Die Kammern 3 sowie das Kanalsystem 4 bilden so auch das Kammersystem 13 bei dem Werkstückhalter 1 aus.

Wie Fig. 6 auch zeigt, sieht das Kanalsystem 4 zwei Zuführungskanäle 8 - in Form von konzentrischen, abschnittsweise umlaufenen Bohrungen - vor, deren jeder eine von den zwei Kammern 3 mit einer zentralen (Drossel-)Stelle 5 im Kanalsystem 4 verbindet ("separate Zuführungskanäle"), über welche zentrale Drosselstelle 5 so das Hydraulikmittel 10 zwischen den zwei Kammern 3 hin-und-her fließen kann (bzw. muss).

Die zentrale Drosselstelle 5 ist, wie in Fig. 6 auch dargestellt, als radial verlaufender zylindrischer Hohlraum ausgebildet, in welchen die zwei Zuführungskanäle 8 der Kammern 3 seitlich münden.

In den Hohlraum bzw. die zentrale Drosselstelle 5 ragt ein in seiner Position verstellbares Stellelement 6 - in Form einer Stellschraube.

Über eine die zentrale Drosselstelle 5 nach außen verbindende radiale Bohrung 11 mit Innengewinde 12 kann die Stellschraube 6 in die Bohrung 11 und so in den Hohlraum/zentrale Drosselstelle 5 ein-/ausgeschraubt werden. Über die Stellschraube 6 ist so auch das Kanalsystem 4 nach außen druckdicht abgeschlossen. Dazu kann auch eine Dichtung 20 vorgesehen sein.

Der Durchmesser der Stellschraube 5 (und so auch der radialen Bohrung 11 mit Innengewinde 12) ist dabei kleiner als der Durchmesser der zentralen Drosselstelle/Hohlraum 5, wodurch ein "Hin-und-Her-Fließen" des Hydraulikmediums 10 im Kammersystem 13 - bei veränderlichem Strömungswiderstand in der zentralen Drosselstelle 5 - gewahrt bleibt.

Durch Ein- bzw. Ausschrauben der Stellschraube verändert sich der Strömungsquerschnitt 7 in der zentralen Drosselstelle 5 - ohne allerdings die Strömung im Kanalsystem 4 über die zentrale Drosselstelle 5 komplett zu unterbinden.

Das Innere der zentralen Drosselstelle 5 kann, anders als dargestellt, auch (zumindest abschnittsweise) als radial verlaufender Hohlkegel ausgebildet sein. Auch kann die Stellschraube 6 (zumindest abschnittsweise) (entsprechend zu dem Hohlkegel) kegel-/konusförmig ausgebildet sein.

Ungeachtet des die zwei Kammern 3 verbindenden Kanalsystems 4 und dessen in ihrem Strömungsquerschnitt mittels der Stellschraube 6 einstellbare/veränderbare Drosselstelle 5 sieht das Kammersystem des Werkstückhalters 1 auch eine (an sich übliche) mit dem Kammersystem auch in fluidaler Verbindung stehende Druckkammer (nicht dargestellt) mit dortig angeordneter, von außen betätigbarer Spannschraube/-kolben vor - zum Druckaufbau zum/und Spannen des Werkstückhalters 1 (nicht dargestellt).

Dazu kann beispielsweise eine der zwei Kammern 3 des Werkstückhalters 1 über einen weiteren (Druck-)Kanal mit der Spannkammer verbunden sein (nicht dargestellt).

Durch Betätigung der Spannschraube/-kolben wird das Hydraulikmittel in das Kammersystem 13 gepresst und (Spann-)Druck aufgebaut, wodurch sich der Spannabschnitt 2, d.h. speziell eine Außenwand der Hülsenpartie, nach außen wölbt.

Alternativ kann bei entsprechender Ausgestaltung der Hülsenpartie auch ein Spannen eines Werkstücks nach innen erfolgen.

Des Weiteren kann alternativ zu dem nach Figur 6 vorgesehenen Werkstückhalter, diese Ausführung auch als Werkzeughalter vorgesehen sein.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung gemäß der nachfolgenden Ansprüche zu verlassen.

### Bezugszeichenliste

- 1: Vorrichtung zum hydraulischen Spannen von Werkzeugen/Werkstücken, hydraulisch spannbarer Werkzeug-/Werkstückhalter
- 2: Spannabschnitt
- 3, 3*'*: Kammer
- 4, 4*'*: Kanalsystem
- 5, 5*'*: zentrale Drosselstelle
- 6: (gemeinsames) Stellelement, (gemeinsame) Stellschraube
- 7, 7*'*: Strömungsquerschnitt
- 8, 8*'*: Zuführungskanal
- 9: Längsachse
- 10: Hydraulikmittel/-medium, Öl

- 11: (radiale) Bohrung
- 12: Innengewinde
- 13: Kammersystem
- 14: Dichtung
- 15: gemeinsamer Hohlraum
- 16: zylindrischer Abschnitt
- 17: zylindrischer Abschnitt
- 18: konischer Abschnitt
- 19: konischer Abschnitt
- 20: Dichtung

## Patentansprüche

1. Vorrichtung (1) zum hydraulischen Spannen von Werkzeugen oder Werkstücken mit einem Spannabschnitt (2) zum Spannen eines Werkzeugs oder Werkstücks, welcher Spannabschnitt (2) in seinem Inneren mehrere Kammern (3) aufweist, welche durch ein Kanalsystem (4) fluidal kommunizierend verbunden sind,
**dadurch gekennzeichnet, dass**
in dem Kanalsystem (4) eine zentrale Drosselstelle (5) angeordnet ist mit einem Stellelement (6), unter Verwendung dessen ein Strömungsquerschnitt (7) in der zentralen Drosselstelle (5) veränderbar ist.

2. Vorrichtung (1) zum hydraulischen Spannen von Werkzeugen oder Werkstücken nach dem voranstehenden Anspruch,
**dadurch gekennzeichnet, dass**
das die Kammern (3) verbindende Kanalsystem (4) mehrere Zuführungskanäle (8) aufweist, wobei von den mehreren Zuführungskanälen jeder nur zu jeweils einer von den Kammern führt, wobei ein erstes Zuführungskanalende des jeweiligen Zuführungskanals in der nur einen Kammer endet und ein zweites Zuführungskanalsende des jeweiligen Zuführungskanals in der zentralen Drosselstelle endet.

3. Vorrichtung (1) zum hydraulischen Spannen von Werkzeugen oder Werkstücken nach mindestens einem der voranstehenden Ansprüche,
**dadurch gekennzeichnet, dass**
das Stellelement (6) eine Stellschraube ist, welche insbesondere einen oder mehrere konische Abschnitte (18, 19) aufweist und/oder deren Querschnitt kleiner als der der zentralen Drosselstelle (5, 5*'*) ist.

4. Vorrichtung (1) zum hydraulischen Spannen von Werkzeugen oder Werkstücken nach mindestens einem der voranstehenden Ansprüche,
**dadurch gekennzeichnet, dass**
die zentrale Drosselstelle (5, 5*'*) ein zylindrischer Hohlraum ist.

5. Vorrichtung (1) zum hydraulischen Spannen von Werkzeugen oder Werkstücken nach mindestens einem der voranstehenden Ansprüche,
**dadurch gekennzeichnet, dass**
mehrere Kammern (3 bzw. 3*'*), insbesondere in Umfangsrichtung gleichverteilt und/oder konzentrisch zu einer Längsachse (9) des Werkzeug-/Werkstückhalters 1, in einer axialen Ebene angeordnet sind und/oder die Kammern (3, 3*'*) in mehreren axialen Ebenen in dem Spannabschnitt (2) angeordnet sind.

6. Vorrichtung (1) zum hydraulischen Spannen von Werkzeugen oder Werkstücken nach mindestens einem der voranstehenden Ansprüche,
**dadurch gekennzeichnet, dass**
eine Kammer (3, 3*'*) ein ringabschnittsförmiger Hohlraum und/oder ein Zuführungskanal (8, 8*'*) eine Bohrung sind/ist.

7. Vorrichtung (1) zum hydraulischen Spannen von Werkzeugen oder Werkstücken nach mindestens einem der voranstehenden Ansprüche,
**dadurch gekennzeichnet, dass**
die zentrale Drosselstelle (5, 5*'*) über eine Bohrung (11) nach außen verbunden ist, wobei insbesondere die Drosselstelle (5, 5*'*) über die Bohrung (11) nach außen druckdicht abgeschlossen ist.

8. Vorrichtung (1) zum hydraulischen Spannen von Werkzeugen oder Werkstücken nach mindestens einem der voranstehenden Ansprüche,
**gekennzeichnet durch**
mindestens zwei Kanalsysteme (4, 4*'*) gemäß dem Kanalsystem (4), wobei die Strömungsquerschnitte (7, 7*'*) der mindestens zwei zentralen Drosselstellen (5, 5*'*) der mindestens zwei Kanalsysteme (4, 4*'*) unter Verwendung eines einzigen gemeinsamen Stellelements (6) veränderbar sind.

9. Vorrichtung (1) zum hydraulischen Spannen von Werkzeugen oder Werkstücken nach mindestens einem der voranstehenden Ansprüche,
**dadurch gekennzeichnet, dass**
die zentrale Drosselstelle (5) eine Spannkammer und/oder das Stellelement (6) eine Spannschraube eines hydraulischen Spannsystems (8) bei dem hydraulisch spannbaren Werkzeug-/Werkstückhalter (1) sind/ist.

10. Verfahren zur Herstellung einer Vorrichtung (1) zum hydraulischen Spannen von Werkzeugen oder Werkstücken nach mindestens einem der voranstehenden Ansprüche,
**dadurch gekennzeichnet, dass**
der Spannabschnitt (2) additiv hergestellt wird.

## Claims

1. Device (1) for hydraulically clamping tools or workpieces, with a clamping portion (2) for clamping a tool or workpiece, the interior of which clamping portion (2) has a plurality of chambers (3) which are connected in a fluidally communicating manner by means of a channel system (4),
**characterized in that**
a central throttle point (5) is arranged in the channel system (4), with an adjustment element (6), using which a flow cross section (7) in the central throttle point (5) can be changed.

2. Device (1) for hydraulically clamping tools or workpieces according to the preceding claim,
**characterized in that**
the channel system (4) connecting the chambers (3) has a plurality of supply channels (8), wherein each of the plurality of supply channels leads only to in each case one of the chambers, wherein a first supply channel end of the respective supply channel ends in the just one chamber and a second supply channel end of the respective supply channel ends in the central throttle point.

3. Device (1) for hydraulically clamping tools or workpieces according to at least one of the preceding claims,
**characterized in that**
the adjustment element (6) is an adjustment screw which in particular has one or more conical portions (18, 19) and/or the cross section of which is smaller than that of the central throttle point (5, 5').

4. Device (1) for hydraulically clamping tools or workpieces according to at least one of the preceding claims,
**characterized in that**
the central throttle point (5, 5') is a cylindrical cavity.

5. Device (1) for hydraulically clamping tools or workpieces according to at least one of the preceding claims,
**characterized in that**
a plurality of chambers (3 and 3') are arranged in an axial plane, in particular in a manner distributed uniformly in the circumferential direction and/or concentrically with respect to a longitudinal axis (9) of the tool/workpiece holder (1), and/or the chambers (3, 3') are arranged in a plurality of axial planes in the clamping portion (2).

6. Device (1) for hydraulically clamping tools or workpieces according to at least one of the preceding claims,
**characterized in that**
a chamber (3, 3') is a cavity in the shape of an annular portion and/or a supply channel (8, 8') is a bore.

7. Device (1) for hydraulically clamping tools or workpieces according to at least one of the preceding claims,
**characterized in that**
the central throttle point (5, 5') is connected to the outside via a bore (11), wherein in particular the throttle point (5, 5') is closed in a pressure-tight manner to the outside via the bore (11).

8. Device (1) for hydraulically clamping tools or workpieces according to at least one of the preceding claims,
**characterized by**
at least two channel systems (4, 4') in accordance with the channel system (4), wherein the flow cross sections (7, 7') of the at least two central throttle points (5, 5') of the at least two channel systems (4, 4') can be changed using a single common adjustment element (6).

9. Device (1) for hydraulically clamping tools or workpieces according to at least one of the preceding claims,
**characterized in that**
the central throttle point (5) is a clamping chamber and/or the adjustment element (6) is a clamping screw of a hydraulic clamping system (8) in the hydraulically clampable tool/workpiece holder (1).

10. Method for producing a device (1) for hydraulically clamping tools or workpieces according to at least one of the preceding claims,
**characterized in that**
the clamping portion (2) is produced additively.

## Revendications

1. Dispositif (1) pour le serrage hydraulique d'outils ou de pièces avec une section de serrage (2) pour le serrage d'un outil ou d'une pièce, laquelle section de serrage (2) présente à l'intérieur plusieurs chambres (3) qui sont reliées par un système de canaux (4) de manière à communiquer fluidiquement,
**caractérisé en ce**
**qu'**un point d'étranglement central (5) est agencé dans le système de canaux (4) avec un élément de réglage (6), à l'aide duquel une section transversale d'écoulement (7) peut être modifiée dans le point d'étranglement central (5) .

2. Dispositif (1) pour le serrage hydraulique d'outils ou de pièces selon la revendication précédente,
**caractérisé en ce que**
le système de canaux (4) reliant les chambres (3) présente plusieurs canaux d'amenée (8), chacun des plusieurs canaux d'amenée ne menant qu'à uniquement une des chambres, une première extrémité de canal d'amenée du canal d'amenée respectif se terminant dans l'uniquement une chambre et une deuxième extrémité de canal d'amenée du canal d'amenée respectif se terminant dans le point d'étranglement central.

3. Dispositif (1) pour le serrage hydraulique d'outils ou de pièces selon au moins l'une quelconque des revendications précédentes,
**caractérisé en ce que**
l'élément de réglage (6) est une vis de réglage qui présente notamment une ou plusieurs sections coniques (18, 19) et/ou dont la section transversale est plus petite que celle du point d'étranglement central (5, 5').

4. Dispositif (1) pour le serrage hydraulique d'outils ou de pièces selon au moins l'une quelconque des revendications précédentes,
**caractérisé en ce que**
le point d'étranglement central (5, 5') est une cavité cylindrique.

5. Dispositif (1) pour le serrage hydraulique d'outils ou de pièces selon au moins l'une quelconque des revendications précédentes,
**caractérisé en ce que**
plusieurs chambres (3 ou 3') sont agencées dans un plan axial, notamment réparties de manière égale dans la direction périphérique et/ou concentriques à un axe longitudinal (9) du porte-outil/porte-pièce 1, et/ou les chambres (3, 3') sont agencées dans plusieurs plans axiaux dans la section de serrage (2).

6. Dispositif (1) pour le serrage hydraulique d'outils ou de pièces selon au moins l'une quelconque des revendications précédentes,
**caractérisé en ce**
**qu'**une chambre (3, 3') est/est une cavité en forme de section annulaire et/ou un canal d'amenée (8, 8') est un alésage.

7. Dispositif (1) pour le serrage hydraulique d'outils ou de pièces selon au moins l'une quelconque des revendications précédentes,
**caractérisé en ce que**
le point d'étranglement central (5, 5') est relié à l'extérieur par l'intermédiaire d'un alésage (11), le point d'étranglement (5, 5') étant notamment fermé de manière étanche à la pression vers l'extérieur par l'intermédiaire de l'alésage (11).

8. Dispositif (1) pour le serrage hydraulique d'outils ou de pièces selon au moins l'une quelconque des revendications précédentes,
**caractérisé par**
au moins deux systèmes de canaux (4, 4') selon le système de canaux (4), les sections transversales d'écoulement (7, 7') des au moins deux points d'étranglement centraux (5, 5') des au moins deux systèmes de canaux (4, 4') pouvant être modifiées à l'aide d'un seul élément de réglage commun (6).

9. Dispositif (1) pour le serrage hydraulique d'outils ou de pièces selon au moins l'une quelconque des revendications précédentes,
**caractérisé en ce que**
le point d'étranglement central (5) est une chambre de serrage et/ou l'élément de réglage (6) est une vis de serrage d'un système de serrage hydraulique (8) dans le porte-outil/porte-pièce (1) à serrage hydraulique.

10. Procédé de fabrication d'un dispositif (1) pour le serrage hydraulique d'outils ou de pièces selon au moins l'une quelconque des revendications précédentes,
**caractérisé en ce que**
la section de serrage (2) est fabriquée de manière additive.
